# EUROPÄISCHE PATENTSCHRIFT

(11) **EP 1 733 088 B1**
(45) Veröffentlichungstag und Bekanntmachung des Hinweises auf die Patenterteilung: **22.06.2016**
(21) Anmeldenummer: 04725905.6
(22) Anmeldetag: 06.04.2004
(51) Int. Cl.: D04H 3/007, D04H 3/011, D04H 3/16, D04H 3/04, D04H 3/12, B01D 39/16

(54) **SPUNBOND-VLIES AUS POLYMERFASERN UND DEREN VERWENDUNG**
SPUN-BONDED NON-WOVEN MADE OF POLYMER FIBERS AND USE THEREOF
NON-TISSE FILE-LIE, A BASE DE FIBRES POLYMERES ET SON UTILISATION

(43) Veröffentlichungstag der Anmeldung: 20.12.2006
(73) Patentinhaber: Fitesa Germany GmbH, 31224 Peine (DE)
(72) Erfinder: ABED, Jean-Claude, 31224 Peine (DE); HERDA, Eduard, 31224 Peine (DE); ROETTGER, Henning, 24568 Kaltenkirchen (DE); SODEMANN, Ralf, 31224 Peine (DE)
(74) Vertreter: dompatent von Kreisler Selting Werner - Partnerschaft von Patent- und Rechtsanwälten mbB
(86) Internationale Anmeldenummer: PCT/EP2004/003612
(87) Internationale Veröffentlichungsnummer: WO 2005/108665

(56) Entgegenhaltungen:
- EP-A- 0 702 994
- WO-A-01/90464
- WO-A-99/28122
- WO-A-03/048442
- WO-A-2004/050216

## Beschreibung

Die vorliegende Erfindung betrifft ein Spunbond-Vlies aus Polymerfasern, welches eine geringe Durchlässigkeit für Licht, flüssige und feste Stoffe aufweist sowie deren Anwendung.

Vliese, die nach einem Spunbond-Verfahren gefertigt sind, bei dem die gesponnenen Fasern direkt nach dem Spinnen auf einem Transportband abgelegt werden, wo sie ein Vlies bilden, sind nach dem Stand der Technik gut bekannt und werden in vielen Bereichen wie z.B. in der Bau-, Textil-, Automobil-, Hygiene-Industrie usw. verwendet. Je nach Anwendungsbereich, werden die Vliese mit einem definierten Eigenschaftsbild hergestellt. Bekannt ist ebenfalls, dass die Fasern dabei runde oder nichtrunde Querschnitte mit beispielsweise deltaförmiger, trilobaler oder flacher Form aufweisen können, wobei die erforderlichen Vlieseigenschaften je nach Anwendungsbereich des Vlieses auf verschiedene Weise, z.B. durch Variation von Fasertiter, Faserquerschnitt, Vliesverfestigung, Flächengewicht usw. eingestellt werden können.

Aus US 3630816 ist beispielsweise ein Spunbond-Vlies mit flachen Fasern aus Polypropylen, deren Querschnitt ein Verhältnis der Länge zur Breite von 3:1 bis 8:1 besitzt. Die Fasern sind dabei zufällig und im Wesentlichen getrennt voneinander, mit Ausnahme der Kreuzungspunkte, angeordnet und weisen Querschnittsflächen von 0,00005 bis 0,008 mm² sowie Fasertiter von ca. 6 bis 13 denier auf. Nach dem Verstrecken der Fasern wurden Zugfestigkeiten von 2 bis 5 g/denier und Dehnungen von 50 bis 400 % je nach Verstreckbedingungen ermittelt. Die dabei erzeugten Vliese besitzen Basisgewichte zwischen 17 und 1.490 g/m², Dichten zwischen 0,2 und 0,7 g/cm³ und Dicken zwischen 0,127 und 7,62 mm. Derartige Vliese besitzen im Vergleich zu Vliesen aus runden Fasern höhere Reißfestigkeiten und werden beispielsweise für Isolationszwecke, zur Papier- und Stoffverstärkung, als Filtermaterialien oder als Teppichunterlagen verwendet.

In US 5458963 wird ein Vlies offenbart, welches aus Fasern mit einem drei- bis sechsschenkligem Querschnitt besteht und die Schenkel derart angeordnet sind, dass eine aufgebrachte Flüssigkeit durch den Kontaktwinkel zwischen der geformten Faser und der in der geformten Faser vorliegenden Flüssigkeit absorbiert und gegen einen Druck zu Orten transportiert wird, welche vom Ort der Flüssigkeitsaufbringung entfernt sind. Diese Vliese weisen Dichten von etwa 0,01 bis 0,5 g/cm³, Dicken zwischen 0,5 µm bis 0,05 m und Fasertiter von ca. 2 bis 3 denier.

Faserstrukturen aus Fasern mit nichtrundem Querschnitt für Produkte mit Thermoisolierungseigenschaften werden in der US 5731248 beansprucht. Dabei werden die Fasern mit einem Titer von 2 bis 15 denier und einem definierten Formfaktor, als Funktion des Umfangs und der Querschnittsfläche der Fasern, hergestellt. Die faserigen Strukturen besitzen ein spezifisches Volumen von etwa 1,5 bis 5 cm³/g und im unkomprimierten Zustand eine Dichte von 0,005 bis 0,05 g/cm³ sowie eine Dicke von weniger als 1,27 cm.

In JP 1201566 und 1201567 werden voluminöse Spunbond-Vliese aus Fasern mit nichtrundem Querschnitt und dadurch größerer Faseroberfläche in Vergleich
zu runden Fasern beschrieben, wobei diese Vliese Flächengewichte ≤ 50 g/m² und Dicken ≤ 5 mm aufweisen.

Ein mehrlagiger Vliesstoff aus vorzugsweise einem Polyolefin mit zweilappigen und dreilappigen bzw. verzweigten Fasern, der durch diese Zusammensetzung eine erhöhte Weichheit und Zugfestigkeit aufweist, wird in DE 3634139 A1 offenbart. Dabei sind die Dreilappigen oder verzweigten Fasern besser benetzbar als die zweilappigen Fasern. An diesen Vliesen, bestehend aus mindestens zwei Schichten, wurden Basisgewichte von etwa 28 - 40 g/m² und Zugfestigkeiten in Maschinenrichtung zwischen etwa 18 bis 58 N ermittelt.

Ein absorbierender Artikel mit einer Transportschicht für Flüssigkeiten, die verbesserte Strömungsrichtungen für diese Flüssigkeiten gewährleistet, wird in EP 549781 B1 beschrieben. Dieses wird dadurch erreicht, dass hydrophile Fasern mit äußeren Kapillarkanälen, die beispielsweise C-förmig sind und stabilisierende Schenkel aufweisen, verwendet werden und diese derart angeordnet sind, dass ein mehrdimensionaler Flüssigkeitstransport erfolgt.

Aus DE 68914387 T2 ist ein kardiertes Vlies aus Stapelfasern mit drei- oder vierlappigem oder rundem, quadratischem oder rechteckigem Querschnitt bekannt, wobei das Vlies weich, wasserdicht und undurchsichtig ist.

In EP 782639 B1 wird ein Vlies bestehend aus Bicomponenten-Fasern mit einer Kern-Mantel-Struktur und mit einem bandförmigen Querschnitt beschrieben, was zu einer erhöhten Opazität oder Bedeckung des Stoffes führt und für Textilien wie z.B. für Autoabdeckungen, Schirme, Gardinen, Planen usw. geeignet ist. Zur Absorption oder Reflektion von Ultraviolettstrahlung werden der Polymerschmeize Substanzen wie mikronisiertes Titandloxid oder Zinkdioxid beigemischt.

Die aus dem Stand der Technik bekannten Maßnahmen zur Verringerung der Durchlässigkeit von Vliesen für Licht, flüssige und feste Stoffe verursachen Jedoch bei der Vliesherstellung einen erhöhten Kostenaufwand bzw. einen erhöhten Materialeinsatz.

An dieser Stelle setzt die Erfindung ein.

Es ist erstrebenswert, einen Vliesstoff bereitzustellen, welcher Polymerfasern aufweist, die derart geformt und Im Vliesstoff angeordnet sind, dass sie eine hohe Faserüberiappung besitzen und im Vliesstoff eine geringe Durchlässigkeit für Licht, flüssige und feste Stoffe verursachen ohne den zusätzlichen Einsatz von Farbstoffen, Rohstoffen und Zusatzstoffen.

Diese Aufgabe wird mit den Merkmalen des Anspruchs 1 gelöst. Die vorliegende Erfindung steilt einen Spundbond-Vlies aus Polymerfasern zur Verfügung, wobei die Fasern einen nichtkreisförmigen Querschnitt mit einer trilobalen, mehrlobalen, flächigen, ovalen, Z-, S- oder Key-Hole-förmigen Gestalt aufwelsen und die Polymerfasern geringe Fasertiter von 0,5 bis 3,5 dtex aufwelsen. Die Polymerfasern sind aus Polyoelfinen, Polyamid oder Polyester hergestellt. Die Polymerfasern besitzen dabei eine Vorzugsrichtungen senkrecht zu einer Z-Achse in Längs- oder Querrichtung Im Spunbond-Vlies. Das Spunbond-Vlies besitzt ein Flächengewicht von 7 g/m² bis 20 g/m². Zur Verfestlgung des Spunbond-Vlieses kann ein Kleber auf das Vlies aufgetragen werden. Im verfestigten Zustand besitzt das Spunbond-Vlies eine hohe optische und physikalischen Opazität bei einem geringen Flächengewicht. Die optische Opazität wird dabei als die Senkung der Lichtdurchlässigkeit durch das Vlies gemessen.

Die Bestimmung der Senkung der Lichtdurchlässigkeit durch ein Vlies erfolgt unter Verwendung eines Llchttisches. Dabei wird eine Lichtquelle, die sich unterhalb des Lichttisches befindet, auf diesen Lichttisch gerichtet und über einen Sensor, der oberhalb des Lichttisches angeordnet ist, die Intensität des durch den Lichttisch hindurchtretenden Lichts als Grauwert gemessen. Dieser Grauwert entspricht einer Lichtdurchlässigkeit von 100%. Anschließend wird ein Vlies auf dem Lichttisch positioniert und die Lichtintensität erneut gemessen, wobei der Differenzbetrag zwischen diesem Wert und 100% der Senkung der Lichtdurchlässigkeit entspricht.

Zur Beschreibung der physikalischen Opazität werden die Luftdurchlässigkeit durch das Vlies und der Siebrückstand auf dem Vlies herangezogen.
Die Messung der Luftdurchlässigkeit für Vliesstoffe erfolgt nach DIN EN ISO 9237.
Der Siebrückstand auf dem Vliesstoff wird in einem definierten Rüttelvorgang unter Nutzung eines Testing Sieve Shakers, Modell B der Fa. C-E Tyler und unter Verwendung eines Superabsorbers als Siebgut ermittelt und beruht auf einer Gewichtsdifferenzmessung, indem der Anteil an Superabsorber, der nach dem definierten Rüttelvorgang auf dem zu untersuchenden Vlies verbleibt, bestimmt wird.

In einer Ausführungsform der Erfindung enthält das Spunbond-Vlies Polymerfasern mit einer flächigen oder trilobalen Gestalt, wodurch im abgelegten Vlies wesentlich höhere Überlappungsquerschnitte als bei Vliesen mit Fasern runder Gestalt bei gleichem Titer auftreten. Der Einsatz von trilobalen Fasern führt beispielsweise im abgelegten Vlies zu einer Überlappung der Fasern, die ca. 30% höher ist, als die Überlappung, die unter Verwendung von Fasern mit rundem Querschnitt auftritt.

Zur Herstellung des Spunbond-Vlieses werden Polymere in einem Extruder aufgeschmolzen und Polymerfasern aus einer Spinndüse mit einer Vielzahl von Bohrungen gesponnen und anschließend in einem Luftstrom und/oder Gemisch aus Luft und Dampf verstreckt. Die gestreckten Polymerfasern werden in Vorzugsrichtung längs und quer zur Maschinenrichtung, d.h. vorwiegend senkrecht zur z-Richtung auf einem Siebband abgelegt. Die so erhaltenen Vliese können beispielsweise durch Thermobondieren verfestigt werden. Dabei liegen die Fasertiter im Bereich von 0,5 dtex bis 5 dtex, vorzugsweise zwischen 1,4 dtex und 3,5 dtex. Die dabei erhaltenen Vliese besitzen Flächengewichte, gemessen nach DIN EN 29073-1, von 7 g/m² bis 50 g/m², vorzugsweise 10 g/m² bis 20 g/m².

Gemäß der Erfindung weist das Vlies eine höhere Opazität als herkömmliche Vliese auf.
Die optische Opazität des Vlieses, dass heißt die Senkung der Lichtdurchlässigkeit, kann u. a. durch
- die Zugabe von Zusätzen zur Polymerschmelze vor dem Spinnen, wie beispielsweise Mattierungsmittel,
- die Anwendung von stark texturierten Fasern bei der Vliesherstellung, insbesondere von Stapelfasern,
- die Erhöhung des Fasertiters bei gleichzeitig steigendem Flächengewicht des Vlieses oder
- eine Erhöhung des Flächengewichts des Vlieses bei stabil bleibendem Fasertiter verbessert werden.

Die physikalische Opazität des Vlieses, d.h. eine Undurchlässigkeit für Medien wie z.B. Luft, Wasser, Pulver usw. wird auch durch
- eine Erhöhung des Fasertiters,
- eine Texturierung der Fasern oder
- eine Erhöhung des Flächengewichts gesteigert.

Bei mehrlagigen Produkten aus Vliesen kann bei der Herstellung des Verbundes ein heißer Klebstoff angewendet werden. Dabei wird der Klebstoff beispielsweise in geschmolzenem Zustand einseitig auf ein Vlies aufgetragen, um es mit einer anderen Schicht zu verbinden. Es ist dabei unerwünscht, dass der Klebstoff das Vlies durchdringt. Die Kleberpenetration kann ebenfalls durch die Erhöhung des Flächengewichts reduziert werden, d.h. durch eine höhere Schichtdicke des Vlieses.

Die erhöhte Opazität des erfindungsgemäßen Vlieses wird dabei durch eine Kombination von optischen und physikalischen Maßnahmen erreicht ohne den zusätzlichen Einsatz von Farbstoffen, Rohstoffen und Zusatzstoffen.
Hierfür geeignete Maßnahmen sind beispielsweise
- die gezielte Polymerwahl, wobei beispielsweise die natürliche Trübung des Polypropylens mit steigendem MFI und mit einer breiteren Molekulargewichtsverteilung zunimmt
- die Wahl der Verarbeitungsparameter zum Verspinnen, zur Abkühlen und zum Strecken des Polymers, indem eine stärkere Trübung der Polymerfasern durch eine langsamere Faserkühlung beim Spinnen und durch geringere Faserverstreckung erreicht wird,
- der Einsatz von Additiven oder Zusatzmitteln, wobei die Trübung durch den Zusatz von Mattierungsmitteln wie z.B. Titandioxid, Calcit usw. zur Polymerschmelze vor dem Spinnen verstärkt wird,
- die Strukturierung oder Gliederung der Faseroberfläche, d.h. die Herstellung von Fasern mit einer nichtrunden, vorzugsweise trilobalen, mehrlobalen oder flächigen Form des Faserquerschnitts,
- die Anordnung der Fasern im Vlies senkrecht zur Z-Richtung und in Vorzugsrichtung in Maschinenrichtung und quer zur Maschinenrichtung, dass eine größere Faserüberlappung erreicht wird.

Beim Vergleich von Vliesen mit gleichem Flächengewicht und gleichem Titer besitzt das erfindungsgemäße Spunbond-Vlies eine optische Opazität, gemessen als die Senkung der Lichtdurchlässigkeit bezogen auf das Flächengewicht von 5 bis 20%, vorzugsweise 6 - 9%, dass heißt die Lichtdurchlässigkeit des Vlieses ist bei Verwendung von trilobalen Fasern vorzugsweise um 6 - 9% gesenkt. Im Vergleich hierzu führt die Verwendung von runden Fasern zur Herstellung eines Vlieses lediglich zu einer Senkung der Lichtdurchlässigkeit von 1 - 4%.

Zur Verfestigung des Spunbond-Vlieses kann ein Kleber eingesetzt werden, wobei der Kleberanteil pro m² Spunbond-Vlies in einer Größenordnung von 0,5 g bis 10 g, vorzugsweise 3 g bis 6 g zugesetzt wird.

Der dabei verwendete Kleber weist im Temperaturbereich zwischen 140°C - 160°C dynamische Viskositäten im Bereich von 3.000 mPas bis 33.000 mPas, vorzugsweise 4.000 mPas bis 6.000 mPas auf. Die Kleberpenetration durch das Vlies hindurch wird dadurch verringert, dass die Fasern, bedingt durch die nichtrunde Form des Faserquerschnitts, dass heißt eine flache, ovale, tri- oder mehrlobale Form, eine vergrößerte Faseroberfläche im Vergleich zu Fasern mit rundem Querschnitt bei gleichem Titer aufweisen und im abgelegten Vlies eine größere Faserüberlappung erreicht wird. Die damit verbundenen längeren und schmaleren Fließwege zwischen den Fasern verlangsamen die Ausbreitgeschwindigkeit des Klebers derart, dass die Erstarrung des Klebstoffs eintritt, bevor er das Vlies durchdringt.
Außerdem können die Polymerschmelzen, die zum Verspinnen der Fasern eingesetzt werden, Zusatzmitteln mit hoher Wärmespeicherkapazität enthalten, die dem geschmolzenen Klebstoff im abgelegten Vlies während der Benetzung und Durchdringung des Vlieses die Wärme schnell entziehen, so dass er im Vlies erstarrt ohne dieses dabei vollständig zu durchdringen.

Gemäß einer weiteren Ausführungsform nimmt die physikalische Opazität des Spunbond-Vlieses bezogen auf das Flächengewicht, gemessen als Siebrückstand, Werte im Bereich von 75% bis 99%, vorzugsweise zwischen 90% und 95% an. Hierbei wurde eine Rüttelzeit von 20 Minuten eingestellt.

Das erfindungsgemäße Spunbond-Vlies besitzt in einer weiteren Ausführungsform eine physikalische Opazität bezogen auf das Flächengewicht, gemessen als Luftdurchlässigkeit, im Bereich von 6·10³l/m² sec bis 9·10³l/m² sec, vorzugsweise zwischen 7·10³l/m² sec und 8·10³l/m² sec.

Zur Herstellung der Polymerfasern des Spunbond-Vlieses werden Polymere aus der Gruppe Polyolefine, PA, Polyester, vorzugsweise Polypropylen verwendet.

Zur Herstellung des erfindungsgemäßen Spunbond-Vlieses kann beispielsweise ein nach dem Ziegler-Natta-Verfahren gefertigtes Polypropylen mit einer Molekulargewichtsverteilung M_{w}/Mₙ > 3 und mit einem MFI ≥ 25 g/10 min genutzt werden. Beim Spinnprozess werden als Zusatzmittel mit hoher Wärmespeicherkapazität vorzugsweise anorganische Salze wie beispielsweise Titanoxide und/oder Calciumkarbonate genutzt, die der Polymerschmelze zwischen 0,1 und 5 Gew-%, vorzugsweise zwischen 0,2 und 0,7 Gew-%, zugesetzt werden ohne ein zusätzliches Nukleierungsmittel zu verwenden. Die dabei gebildeten Fasern werden während ihrer Herstellung und vor ihrer Ablage, beispielsweise auf einem Siebband, langsam abgekühlt. Um eine langsame Kühlung der Fasern zu erreichen, wird bevorzug eine Kühlluft mit einer Temperatur > 20 °C eingesetzt. Die Fasern werden leicht verstreckt, so dass sie eine Dehnung > 200 % ist. Die abgelegten Vliese besitzen Flächengewichte zwischen 7 g/m² bis 50 g/m², vorzugsweise 10 g/m² bis 20 g/m².
Die stark gegliederte Faseroberfläche kann dabei eine tri-, tetra-, penta-, hexa- lobal ist, oder eine flache, ovale, Z-, S-, Key-Hole Form des Faserquerschnitts aufweisen.
Die Faserquerschnittsform ermöglicht in der Faser gleichzeitig eine andere Materialverteilung als bei runden Fasern, indem Fasern mit mehreren Schenkeln gebildet werden können und somit der Durchmesser der Fasern, beziehungsweise die projizierte Schenkel- oder Kantenlänge, bei unverändertem Titer im Vergleich zu runden Fasern stark vergrößert ist. Dadurch kann im abgelegten Vlies eine größere Überlappung der Faserquerschnitte erreicht werden, was zu einer höheren Abdeckungskraft der Fasern untereinander führt und beispielsweise den Widerstand solcher Fasern gegen eine Kleberpenetration vergrößert.
Derartige Vliese weisen im Vergleich zu einem herkömmlichen Vlies mit gleichem Flächengewicht eine höhere optische und physikalische Opazität und einen höheren Widerstand gegen Kleberpenetration auf.
- Figur 1: ist eine schematische Darstellung Fasern mit runder, flacher und trilobaler Form des Faserquerschnitts und deren Überlappung.
- Figur 2: ist eine schematische Darstellung des Kleberdurchgangs für Vliese mit runden und Vliese mit trilobalen Fasern.
- In Figur 3: wird die Senkung der Lichtdurchlässigkeit in Abhängigkeit vom Flächengewicht des Vlieses und von der Form des Faserquerschnitts gezeigt.
- In Figur 4: wird die Luftdurchlässigkeit in Abhängigkeit vom Flächengewicht der Vliese und von der Form des Faserquerschnitts dargestellt.
- In Figur 5: wird der Zusammenhang zwischen dem Siebrückstand und dem Flächengewicht des Vlieses für unterschiedliche Faserquerschnitte dargestellt.
- Figur 6: gibt einen Überblick über die Entwicklung der Zugfestigkeit des Vlieses in Maschinenrichtung und quer zur Maschinenrichtung in Abhängigkeit vom Flächengewicht des Vlieses und vom Faserquerschnitt
- Figur 7: zeigt die Vliesdehnung in Maschinenrichtung und quer zur Maschinenrichtung Vliese mit trilobale und runden Faserquerschnitt.

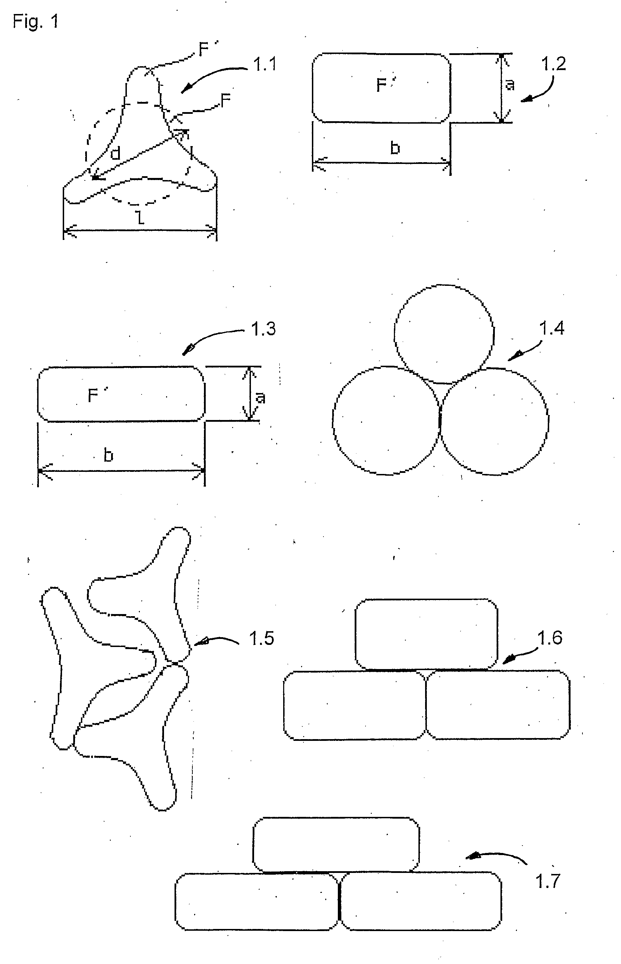

Die Figur 1 veranschaulicht die Querschnitte der im Rahmen der Erfindung näher betrachteten Fasern. Die Darstellung 1.1 zeigt eine kreisförmige Querschnittsfläche F, die den gleichen Flächeninhalt aufweist, wie die Fläche F', die zu einer trilobalen Faser gehört, wobei erkennbar ist, dass die projizierte Kantenlänge 1 der Fasern mit einer trilobalen Form des Querschnitts ca. 30% größer ist, als der Durchmesser d der Fasern mit rundem Querschnitt, was einem Verhältnis 1 = 1,3 d entspricht. Werden diese trilobalen Fasern erfindungsgemäß in Vorzugsrichtung senkrecht zur Z-Richtung, das heißt in Maschinenrichtung und/oder quer zur Maschinenrichtung zu einem Vlies abgelegt, kann in diesem Vlies somit eine 30% höhere Faserüberlappung erreicht werden, als die maximal mögliche Überlappung, die bei Verwendung von runden Fasern erreichbar wäre. Flache Fasern mit einem Kantenverhältnis b = 2a gemäß Fig. 1.2 weisen im Vergleich zu runden Fasern eine ca. 25 % größere projizierte Kantenlänge auf und Fasern mit einem Kantenverhältnis von b = 3a gemäß Fig. 1.3 eine ca. 53 % größere Kantenlänge. Die Figuren 1.4 bis 1.7 verdeutlichen den Sachverhalt der Faserüberlappung.

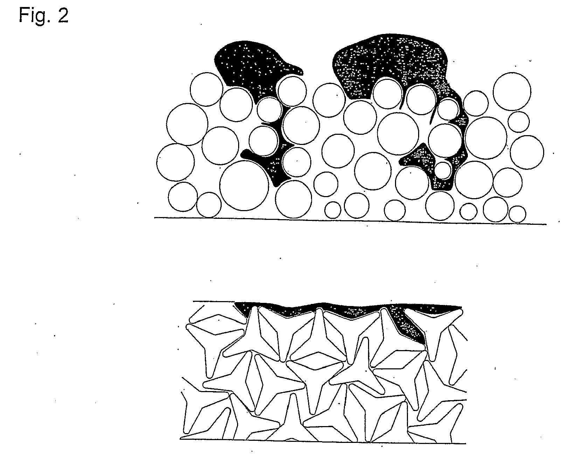

Figur 2 zeigt beispielhaft, wie ein Kleber entsprechend dem bei der jeweiligen Fasergeometrie vorhandenen Lückenvolumen im abgelegten Vlies durch dieses penetrieren oder im günstigeren Fall nur in das Vlies eindringen und dieses verfestigen kann ohne durch das Vlies hindurch zu treten. Dabei wird deutlich, dass durch den Einsatz von trilobalen Fasern eine höhere Packungsdichte innerhalb des Vlieses erreicht wird und die damit verbundenen schmaleren Fließwege die Kleberpenetration drastisch reduzieren.

Die Erfindung soll anhand von Beispielen näher erläutert werden, um einen Vergleich zwischen Vliesen mit runden Fasern und Vliesen mit trilobalen Fasern hinsichtlich ihrer Durchlässigkeit für Licht, Luft und staubförmige Partikel darzustellen.

### Beispiel 1

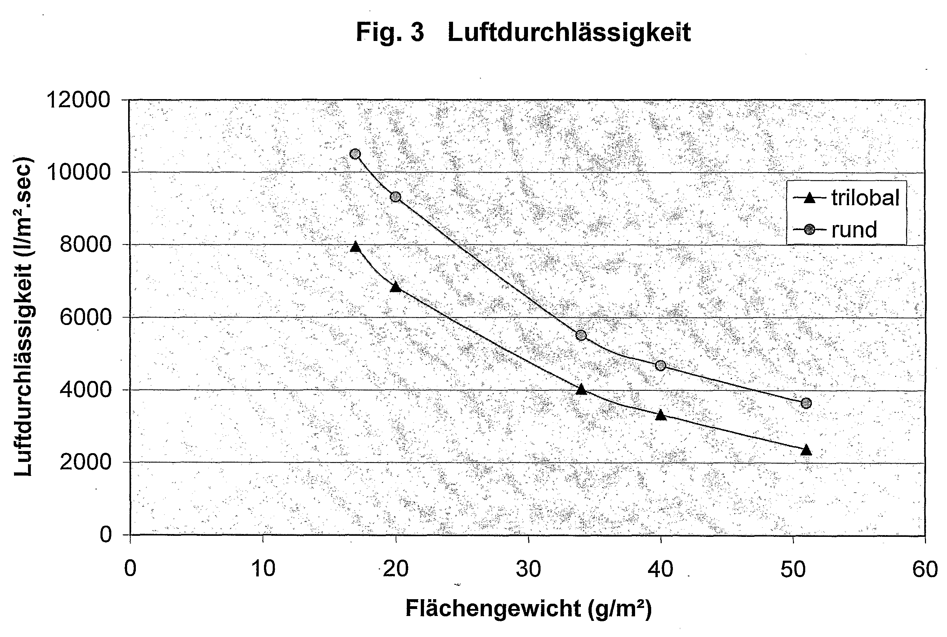

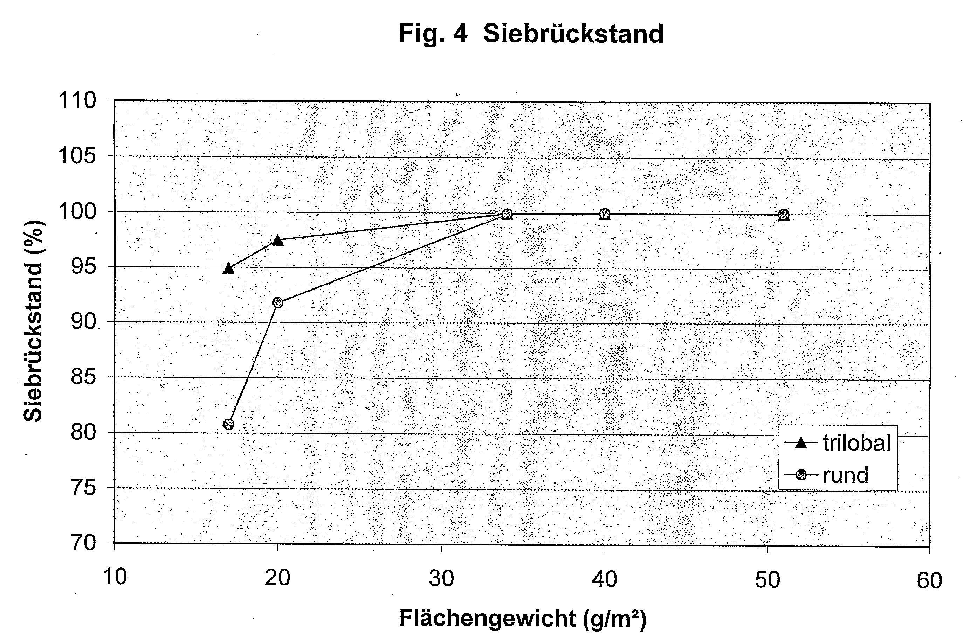

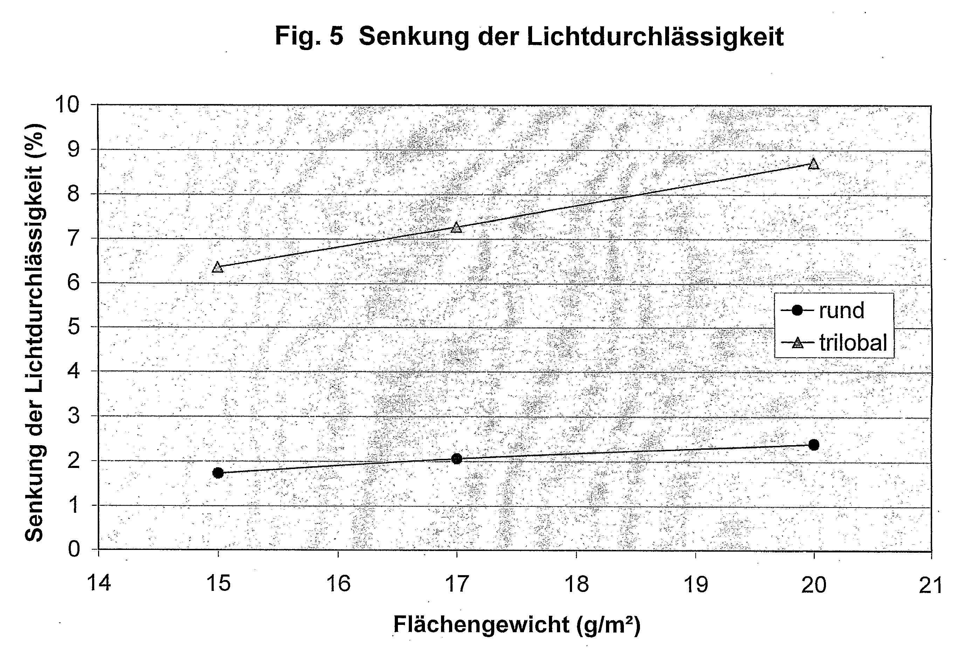

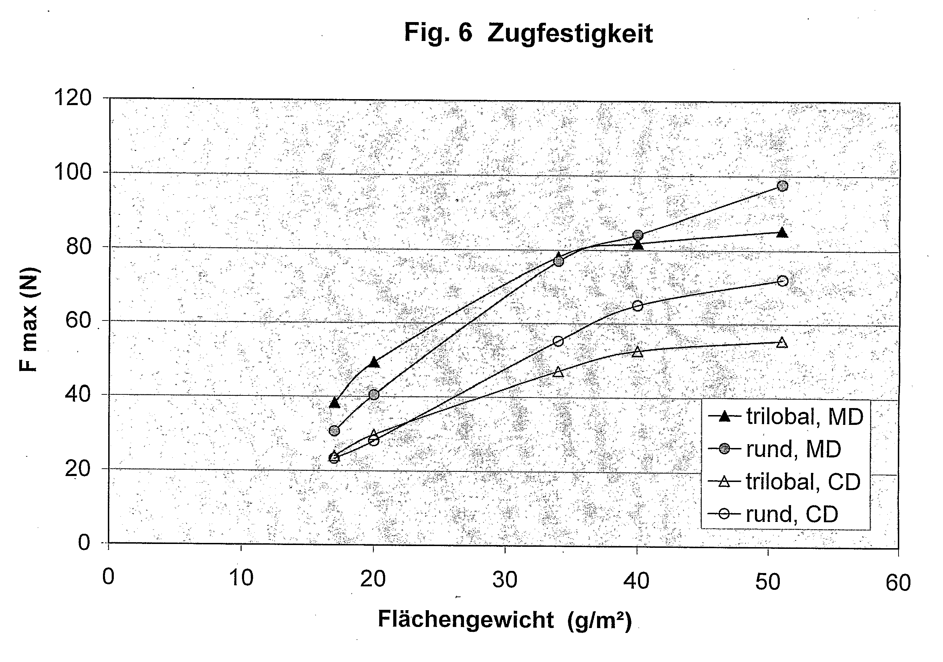

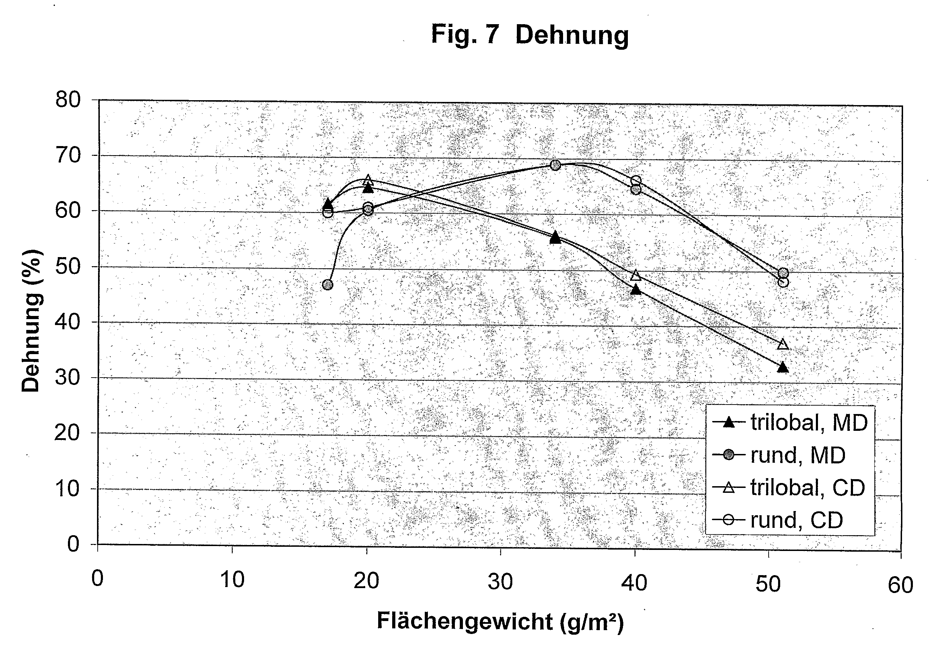

Als Rohstoff wurde zur Herstellung der Proben ein nach dem Ziegler-Natta-Verfahren hergestelltes Polypropylen verwendet, wobei 0,25 Gew.-% Titanoxid bezogen auf die Polymerschmelze eingesetzt worden sind.
Die Herstellung von runden bzw. trilobalen Fasern erfolgte dabei nach einem bekannten Spunbond-Prozess.
Der Durchsatz der Spinnplatte wurde pro Meter Spinnplatte konstant bei 162 kg/h gehalten, wobei die Spinnplatte insgesamt 5000 Bohrungen mit einem Durchmesser von 0,6 mm aufwies. Die Fasern wurden leicht verstreckt und wiesen Faserdehnungen von 279 % auf. Dieser Wert wurde an einer Zugprüfmaschine der Fa. Zwick mit 0,1 N Vorspannkraft, einer Zuggeschwindigkeit von 100 mm/min und einer Einspannlänge von 20 mm ermittelt.
Für die so erhaltenen Fasern mit rundem Querschnitt wurden die Faserdurchmesser im Mikroskop gemessen und auf das Faserlängengewicht bezogen, wobei ein Fasertiter mit 2,8 dtex ermittelt werden konnte. Im Falle der trilobalen Fasern wurde der sogenannte Scheintiter ermittelt, das heißt der Faserquerschnitt wurde ebenfalls im Mikroskop gemessen und auf das Längengewicht der runden Faser mit gleichem Durchmesser berechnet, wobei für diese Fasern ein Titer von 3,7 dtex ermittelt worden ist.
Die Fasern wurden vorzugsweise in Maschinenrichtung und quer zur Maschinenrichtung zu einem Vlies abgelegt. Nach DIN EN 29073-1 wurden für die abgelegten Vliese, jeweils mit runden und trilobalen Faserquerschnitten, in Abhängigkeit von der Vliesdicke und vom Faserquerschnitt Flächengewichten von 17 g/m², 20 g/m², 34 g/m², 40 g/m², und 51 g/m² gemessen. Die Vliesdicken liegen dabei zwischen 250 µm und 600 µm. Diese Vliese weisen nach der thermischen Verfestigung Dichten zwischen 0,045 und 0,065 g/cm³ und spezifische Volumina zwischen 15,5 und 20,8 cm³/g auf.
An diesen Vliesen wurden zur Charakterisierung der physikalischen Opazität die Luftdurchlässigkeit und der Siebrückstand gemessen. Gemäß Figur 3 wurden für Vliese mit runder Faserform Werte für die Luftdurchlässigkeit gemessen, die zwischen ca. 9.000 bis 11.000 1/m² sec liegen. Vliese mit trilobaler Querschnittsform weisen auf Grund der höheren Überlappung der Fasern etwas niedrigere Luftdurchlässigkeitswerte auf, die unterhalb von 8.000 1/m² sec liegen.
Gemäß Figur 4 wurde an diesen Vliesen der Siebrückstand ermittelt, wobei als Siebgut SAP 35, ein Superabsorberpolymer der Firma Atofina verwendet worden ist. Hierbei sind die für den Siebrückstand ermittelten Werte für Vliese mit trilobalen Fasern bei gleichem Flächengewicht höher als die Werte für Vliese mit runden Fasern. Während Vliese mit runden Fasern erst bei einem Flächengewicht von 20 g/m² einen Siebrückstand von > 90% aufweisen, wurden diese Werte bei Vliesen mit trilobalem Querschnitt bereits bei Flächengewichten von 17 g/m² gemessen. An Vliesen mit 15 g/m² und 20 g/m² wurden zur Bestimmung der optischen Opazität Werte für die Senkung der Lichtdurchlässigkeit gemäß Figur 5 gemessen, die für runde Fasern im Bereich von ca. 1,5 bis 2,5 % und für trilobale Fasern zwischen ca. 6,3 bis 8,8 % liegt.
Des weiteren wurden an den Vliesen entsprechend Fig. 6 die Zugfestigkeiten als Fₘₐₓ gemäß DIN EN 20973-3 in CD- und MD-Richtung gemessen, die für Vliese mit trilobalen Fasern und Flächengewichten von 17 g/m² bis 51 g/m² in Maschinenrichtung im Bereich zwischen 38 N bis 85 N und senkrecht zur Maschinenrichtung zwischen 25 N und 55 N liegen. In dem erfindungsgemäß bevorzugten Bereich der Flächengewichte des Vlieses, das heißt zwischen 10 bis 20 g/m², zeigen Vliese mit trilobalen Fasern höhere Festigkeiten als Vliese mit runden Fasern bei gleichem Flächengewicht und gleichem Titer. So wurden beispielsweise für Vliese mit trilobalen Fasern in diesem Bereich Festigkeiten zwischen 38 bis 50 N in Maschinenrichtung und Festigkeiten zwischen 25 und 30 N quer zur Maschinenrichtung gemessen.
Gemäß Fig. 7 und entsprechend DIN EN 20973-3 wurden an diesen Vliesen Werte für die Dehnung bei Fₘₐₓ ermittelt. In Maschinenrichtung liegen die Werte dabei je nach Flächengewicht zwischen 35 % bis 65 % und quer zur Maschinenrichtung zwischen 38 % und 68 %.

### Beispiel 2

Bei allen Proben wurde als Polymeres Ziegler-Nattakatalysiertes Polypropylen unter Zugabe von Titanoxid gemäß dem Beispiel 1 verwendet, wobei der Spinnvorgang unter Verwendung der Spinnplatte gemäß Beispiel 1 mit einem Durchsatz von 185 kg/h und pro Meter Spinnplatte ausgeführt worden ist.
Dabei sind runde Fasern mit einem Fasertiter bezogen auf das Flächengewicht von 2,4 dtex und trilobale Fasern mit einem Fasertiter von 2,8 dtex erzeugt worden, wobei die Ermittlung des Fasertiters analog dem Beispiel 1 vorgenommen worden ist. An den abgelegten Vliesen wurden Luftdurchlässigkeiten gemessen, die für Vliese mit runden Fasern je nach Flächengewicht zwischen ca. 8.000 bis 10.000 l/m² sec und für Vliese mit trilobalen Fasern zwischen 6.500 und 8.500 l/m² sec liegen. Zur Bestimmung des Siebrückstands wurde das SAP 35 gemäß Beispiel 1 verwendet. Die gemessenen Werte sind für Vliese aus trilobalen Fasern je nach Flächengewicht in der Größenordnung von ca. 88 - 99 % und für Vliese aus runden Fasern zwischen 76 und 95 %.

Die erfindungsgemäßen Vliese eignen sich für zahlreiche Einsatzgebiete, insbesondere im Hygienebereich aber auch im Bereich Filtertechnik oder im Bereich der Haushaltstücher.

Im Hygienebereich können sie beispielsweise als Topsheet oder Backsheet verwendet werden. Dabei weisen Topsheet oder Backsheet Polymerfasern mit einem nichtkreisförmigen Querschnitt und sehr geringen Titern auf und besitzen Vorzugsrichtungen im Spunbondvlies. Durch Verwendung des Spunbondvlieses zeigen daraus gefertigte Hygieneartikel eine hohe optische und physikalische Opazität. Die hohe physikalische Opazität kommt insbesondere durch die reduzierte Kleberpenetration des Vlieses zum Tragen, da mit sehr geringen Klebstoffanteilen und niedrigen Viskositäten bei der Herstellung des Hygieneproduktes gearbeitet werden kann.

Auf dem Gebiet der Filtertechnik zeigen diese Vliese aus Polymerfasern mit einem nichtkreisförmigen Querschnitt auf Grund ihrer Fasergeometrie, der Vorzugsrichtungen der Fasern im Vlies und der damit verbundenen hohen Packungsdichte ein sehr gutes Rückhaltevermögen für Stäube ohne dabei den Widerstand für durchströmende Luft drastisch zu erhöhen.

Ebenso sind die Vliese mit nichtkreisförmigem Querschnitt im Haushaltsbereich, beispielsweise für Wischtücher geeignet, da die Faserabmessungen der Größe der Verunreinigungen entsprechen, sind sie somit in der Lage, feine Partikel und mikroskopisch kleine Staubteilchen gut aufnehmen zu können.

## Patentansprüche

1. Spunbond-Vlies aus Polymerfasern, **dadurch gekennzeichnet, dass**
- die Polymerfasern einen nichtkreisförmigen Querschnitt mit einer trilobalen, mehrlobalen, flächigen, ovalen, Z-, S- oder Key-Hole-förmigen Gestalt aufweisen: und
- die Polymerfasern geringe Fasertiter von 0,5 bis 3,5 dtex aufweisen; und
- die Polymerfasern aus Polyolefinen, Polyamid oder Polyester hergestellt sind; und
- die Polymerfasern eine Vorzugsrichtung senkrecht zu einer Z-Achse in Längs- oder Querrichtung im Spunbond-Vlies besitzen; und
- das Spunbond-Vlies Flächengewichte von 7 g/m2 bis 20 g/m2 beisitzt.

2. Spunbond-Vlies nach Anspruch 1, **dadurch gekennzeichnet, dass** die Polymerfasern eine flächige, trilobale oder mehrlobale Gestalt besitzen.

3. Spunbond-Vlies nach Anspruch 1, **dadurch gekennzeichnet, dass** die Polymerfasern in Vorzugsrichtung längs und/oder quer zur Maschinenrichtung vorliegen.

4. Spunbond-Vlies nach Anspruch 1, dadurch gekenntzeichnet, dass das Spunbond-Vlies eine optische Opazität, bezogen auf das Flächengewicht, gemessen als die Senkung der Lichtdurchlässigkeit, im Bereich von 5% bis 20%, vorzugsweise zwischen 6% bis 9%, aufweist.

5. Spunbond-Vlies nach Anspruch 1, dadurch gekenntzeichnet, dass das Spunbond-Vlies eine physikalische Opazität, bezogen auf das Flächengewicht, gemessen als Siebrückstand, im Bereich zwischen 90% und 95% aufweist,

6. Spunbond-Vlies nach Anspruch 5, **dadurch gekennzeichnet, dass** die physikalische Opazität, bezogen auf das Flächengewicht, gemessen als Luftdurchlässigkeit, im Bereich von 6*10³ l/m² sec bis 9*10³ l/m² sec, vorzugsweise zwischen 7*10³ l/m² sec und 8*10³ l/m² sec liegt.

7. Spunbond-Vlies nach Anspruch 1, **dadurch gekennzeichnet, dass** die Polymerfasern aus Polypropylen bestehen.

8. Spunbond-Vlies nach Anspruch 1, **dadurch gekennzeichnet, dass** das Vlies kleberkaschiert ist.

9. Spunbond-Vlies nach Anspruch 1, **dadurch gekennzeichnet, dass** das Vlies eine Kleberpenetration deart aufweist, dass ein Kleber erstarrt bevor der Kleber das Vlies durchdringt.

10. Spunbond-Vlies nach Anspruch 8, **dadurch gekennzeichnet, dass** der Kleber im Temperaturbereich zwischen 140 - 160°C dynamische Viskositäten im Bereich von 3.000 mPas bis 33.000 mPas, vorzugsweise 4.000 mPas, bis 6.000 mPas, aufweist.

11. Spunbond-Vlies nach Anspruch 8, **dadurch gekennzeichnet, dass** der Kleberanteil pro m2 Spunbond-Vlies zwischen 0,5 g und 10 g, vorzugsweise zwischen 3g und 6g, liegt.

12. Spunbond-Vlies nach Anspruch 1, **dadurch gekennzeichnet, dass** Zusatzmittel, vorzugsweise anorganische Salze, eingesetzt werden.

13. Spunbond-Vlies nach Anspruch 12, **dadurch gekennzeichnet, dass** als Zusatzmittel Titandioxide und/oder Calciumkarbonate zwischen 0,1 Gew.-% und 5 Gew.-%, vorzugsweise zwischen 0,2 Gew.-% und 0,7 Gew.-%, eingesetzt werden.

14. Verwendung des Spunbond-Vlieses nach einem der Ansprüche 1 bis 13 in einem Hygleneprodukt.

15. Verwendung des Spunbond-Vlieses nach einem der Ansprüche 1 bis 13 in einem Filtermaterial.

16. Verwendung des Spunbond-Vlieses nach einem der Ansprüche 1 bis 13 in einem Haushaltstuch.

## Claims

1. A spunbond nonwoven made of polymer fibers, **characterized in that**
- the polymer fibers have a non-circular cross-section with a trilobal, multilobal, flat, oval, Z, S or keyhole shape; and
- the polymer fibers have low fiber titers of from 0.5 to 3.5 dtex; and
- the polymer fibers are made from polyolefins, polyamide or polyester; and
- the polymer fibers have a preferential direction perpendicular to a z axis in the longitudinal or transverse direction in said spunbond nonwoven; and
- said spunbond nonwoven has masses per area of from 7 g/m² to 20 g/m².

2. The spunbond nonwoven according to claim 1, **characterized in that** said polymer fibers have a flat, trilobal or multilobal cross-section.

3. The spunbond nonwoven according to claim 1, **characterized in that** said polymer fibers are oriented in a preferential direction that is longitudinal and/or transverse with respect to the machine direction.

4. The spunbond nonwoven according to claim 1, **characterized in that** said spunbond nonwoven has an optical opacity, based on the mass per area and measured as a reduction of light transmittance, within a range of from 5% to 20%, preferably from 6% to 9%.

5. The spunbond nonwoven according to claim 1, **characterized in that** said spunbond nonwoven has a physical opacity, based on the mass per area and measured as sieving residue, within a range of from 90% and 95%.

6. The spunbond nonwoven according to claim 5, **characterized in that** the physical opacity, based on the mass per area and measured as air permeability, is within a range of from 6.10³ l/m²·s to 9.10³ l/m²·s, preferably from 7·10³ l/m²·s to 8.10³ l/m²·s.

7. The spunbond nonwoven according to claim 1, **characterized in that** said polymer fibers are made of polypropylene.

8. The spunbond nonwoven according to claim 1, **characterized in that** said nonwoven is laminated with an adhesive.

9. The spunbond nonwoven according to claim 1, **characterized in that** said nonwoven exhibits so slow an adhesive penetration rate that an adhesive will solidify before the adhesive penetrates throughout the nonwoven.

10. The spunbond nonwoven according to claim 8, **characterized in that** said adhesive has dynamic viscosities within a range of from 3000 mPa·s to 33,000 mPa·s, preferably from 4000 mPa·s to 6000 mPa·s, in a temperature range of from 140 to 160 °C.

11. The spunbond nonwoven according to claim 8, **characterized in that** the amount of adhesive per m² of spunbond nonwoven is from 0.5 g to 10 g, preferably from 3 g to 6 g.

12. The spunbond nonwoven according to claim 1, **characterized in that** additives, preferably inorganic salts, are employed.

13. The spunbond nonwoven according to claim 12, **characterized in that** 0.1% by weight to 5% by weight, preferably from 0.2% by weight to 0.7% by weight, titanium dioxides and/or calcium carbonates are employed as said additive.

14. Use of the spunbond nonwoven according to any of claims 1 to 13 in a sanitary product.

15. Use of the spunbond nonwoven according to any of claims 1 to 13 in a filter material.

16. Use of the spunbond nonwoven according to any of claims 1 to 13 in a household tissue.

## Revendications

1. Tissu nontissé de type spunbond constitué de fibres de polymère, **caractérisé en ce que**
- les fibres de polymère présentent une section non-circulaire avec une forme trilobale, multilobale, étendue, ovale, en Z, en S ou de trou de serrure, et
- les fibres de polymère présentent de faibles masses linéiques des fibres de 0,5 à 3,5 dtex, et
- les fibres de polymère sont fabriquées en polyoléfines, polyamide ou polyester, et
- les fibres de polymère ont une direction préférentielle perpendiculaire à un axe Z dans la direction longitudinale ou transversale dans le tissu nontissé de type spunbond, et
- le tissu nontissé de type spunbond présente des grammages de 7 g/m² à 20 g_{/}m².

2. Tissu nontissé de type spunbond selon la revendication 1, **caractérisé en ce que** les fibres de polymère présentent une forme étendue, trilobale ou multi-lobale.

3. Tissu nontissé de type spunbond selon la revendication 1, **caractérisé en ce que** les fibres de polymère sont orientées dans une direction préférentielle qui est longitudinale et/ou transversale par rapport à la direction de la machine.

4. Tissu nontissé de type spunbond selon la revendication 1, **caractérisé en ce que** le tissu nontissé de type spunbond présente une opacité optique, par rapport au grammage, mesurée comme réduction de la transmission lumineuse, comprise entre 5 % et 20 %, de préférence entre 6 % et 9 %.

5. Tissu nontissé de type spunbond selon la revendication 1, **caractérisé en ce que** le tissu nontissé de type spunbond présente une opacité physique, par rapport au grammage, mesurée comme refus de tamisage, comprise entre 90 % et 95 %.

6. Tissu nontissé de type spunbond selon la revendication 5, **caractérisé en ce que** l'opacité physique, par rapport au grammage, mesurée comme perméabilité à l'air, est comprise entre 6.10³ lm²·s et 9.10³ l/m²·s, de préférence entre 7.10³ l/m²·s et 8.10³ l/m²·s.

7. Tissu nontissé de type spunbond selon la revendication 1, **caractérisé en ce que** les fibres de polymère sont fabriquées en polypropylène.

8. Tissu nontissé de type spunbond selon la revendication 1, **caractérisé en ce que** le tissu nontissé est stratifié avec un adhésif.

9. Tissu nontissé de type spunbond selon la revendication 1, **caractérisé en ce que** le tissu nontissé présente une pénétration d'adhésif telle qu'un adhésif se solidifie avant que l'adhésif ait pénétré tout le tissue nontissé.

10. Tissu nontissé de type spunbond selon la revendication 8, **caractérisé en ce que** l'adhésif présente des viscosités dynamiques comprises entre 3000 mPa·s et 33000 mPa·s, de préférence entre 4000 mPa·s et 6000 mPa·s, dans la gamme de température entre 140 et 160 °C.

11. Tissu nontissé de type spunbond selon la revendication 8, **caractérisé en ce que** la quantité de l'adhésif par m² de tissu nontissé de type spunbond est comprise entre 0,5 g et 10 g, de préférence entre 3 g et 6 g.

12. Tissu nontissé de type spunbond selon la revendication 1, **caractérisé en ce que** l'on utilise des additifs, de préférence des sels inorganiques.

13. Tissu nontissé de type spunbond selon la revendication 12, **caractérisé en ce que** l'on utilise des dioxydes de titane et/ou des carbonates de calcium entre 0,1 % en poids et 5 % en poids, de préférence entre 0,2 % en poids et 0,7 % en poids, comme additifs.

14. Utilisation du tissu nontissé de type spunbond selon l'une quelconque des revendications 1 à 13 dans un produit d'hygiène.

15. Utilisation du tissu nontissé de type spunbond selon l'une quelconque des revendications 1 à 13 dans un matériau de filtre.

16. Utilisation du tissu nontissé de type spunbond selon l'une quelconque des revendications 1 à 13 dans un essuie-tout.
